# EUROPEAN PATENT APPLICATION

(11) **EP 3 213 946 A1**
(43) Date of publication of application: **06.09.2017**
(21) Application number: 15854083.1
(22) Date of filing: 15.06.2015
(51) Int. Cl.: B60H 1/34, F24F 13/06, F24F 13/10

(54) **AIR DISCHARGE DEVICE**

(30) Priority: 31.10.2014 JP 2014222610
(71) Applicant: Howa Plastics Co., Ltd., Aichi 470-0496 (JP)
(72) Inventor: YAMAMOTO, Masaaki, Toyota-shi Aichi 470-0496 (JP); KANEDA, Kentaro, Toyota-shi Aichi 470-0496 (JP)
(74) Representative: Ettmayr, Andreas
(86) International application number: PCT/JP2015/067159
(87) International publication number: WO 2016/067671

(57) **Abstract**

An air blowing device (10) includes: a tubular body (21) defining an airflow passage (21a) and an air outlet (21b); a guide wall (31) configured to guide an airflow having passed through the air outlet in an intended direction; and a movable projecting portion (41), which is capable of projecting from an inside of the guide wall to an outside of the guide wall. The guide wall has a convex surface shape projecting in a direction intersecting a forward direction of the air outlet, and is arranged so that a projection image, which is obtained by projecting the guide wall onto a virtual plane including the air outlet, covers the entire air outlet. The movable projecting portion is capable of adjusting a projecting amount from the guide wall within a range of from zero to a predetermined maximum amount, and configured to adjust the projecting amount depending on the intended direction. Thus, the air blowing device capable of keeping the air outlet invisible to the extent possible without impairing a function as an air blowing device can be provided.

## Description

### Technical Field

The present invention relates to an air blowing device including an tubular body defining an airflow passage and an air outlet, a guide wall configured to guide an airflow having passed through the air outlet in an intended direction, and a movable projecting portion which is capable of projecting from an inside of the guide wall to an outside of the guide wall.

### Background Art

Hitherto, there has been proposed an air blowing device, a so-called register, for supplying cooling or heating air to a vehicle cabin of an automobile or the like. In general, this type of air blowing device is capable of adjusting a flow direction of an airflow or the like blown from the air blowing device (hereinafter referred to as "blowing airflow").

One of the related-art air blowing devices (hereinafter referred to as "related-art device") includes a housing defining an airflow passage and an air outlet, and an upstream fin and a downstream fin for adjusting the flow direction of the blowing airflow. The airflow passage of the related-art device has a unique sectional shape, in which convex portions each having a triangular shape in cross section protrude in the vicinity of the air outlet inside the same flow passage. The airflow, which is primarily rectified by the upstream fin and the downstream fin, is secondarily rectified due to the sectional shape. With this multi-level rectification, the related-art device is capable of accurately adjusting the flow direction of the blowing airflow even when the air outlet has such a narrow shape as a rectangle that is short in a vertical direction and long in a horizontal direction (see Patent Literature 1).

### Citation List

### Patent Literature

[PTL 1] JP 2014-91376 A

### Summary of Invention

### Technical Problem

The related-art device achieves the narrower air outlet while maintaining the function to adjust the flow direction of the blowing airflow. Meanwhile, from the viewpoint of further enhancing the appearance of an interior of the automobile and the like, it is desired to keep the air outlet invisible to the extent possible by arranging the air outlet at a position less likely to be visually recognized by a driver and a passenger of the automobile or the like (hereinafter referred to as "user") as well as narrowing the air outlet so that the air outlet is less likely to be recognized,

For example, as an example of keeping the air outlet invisible, it is conceivable to arrange a mask in the vicinity of the air outlet, for blocking a line of sight of the user. However, when the mask is inadvertently arranged in the vicinity of the air outlet of the related-art device, the flow direction of the blowing airflow may be changed to an unintended direction due to the mask though the air outlet may be kept invisible. That is, when the air outlet is kept invisible, the original function of the related-art device to adjust the flow direction of the blowing airflow may be impaired. As described above, it is not easy to keep the air outlet invisible while maintaining the function as an air blowing device.

The present invention has been made in view of the above-mentioned problems, and provides an air blowing device capable of keeping an air outlet invisible to the extent possible without impairing a function as an air blowing device.

### Solution to Problem

In order to achieve the above-mentioned objective, according to one embodiment of the present invention, there is provided an air blowing device including: a tubular body defining an airflow passage and an air outlet; a guide wall configured to guide an airflow having passed through the air outlet in an intended direction; and a movable projecting portion, which is capable of projecting from an inside of the guide wall to an outside of the guide wall.

Specifically, the guide wall has a convex surface shape protruding in a direction intersecting a forward direction of the air outlet, and is arranged so that a projection image, which is obtained by projecting the guide wall onto a virtual plane including the air outlet, covers the entire air outlet.

Further, the movable projecting portion is capable of adjusting a projecting amount from the guide wall within a range of from zero to a predetermined maximum amount, and is configured to adjust the projecting amount depending on the intended direction.

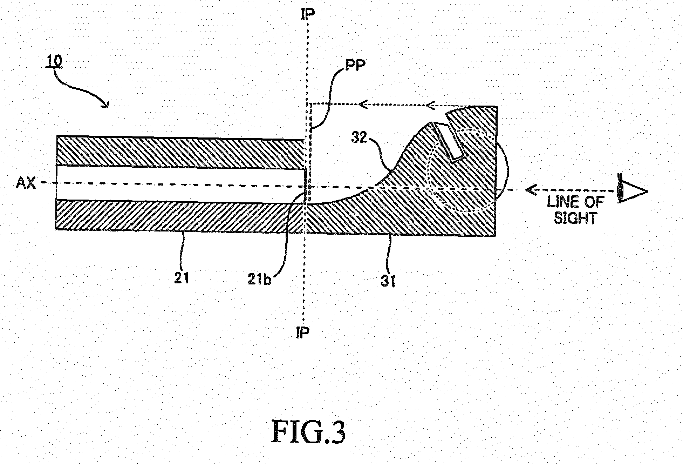

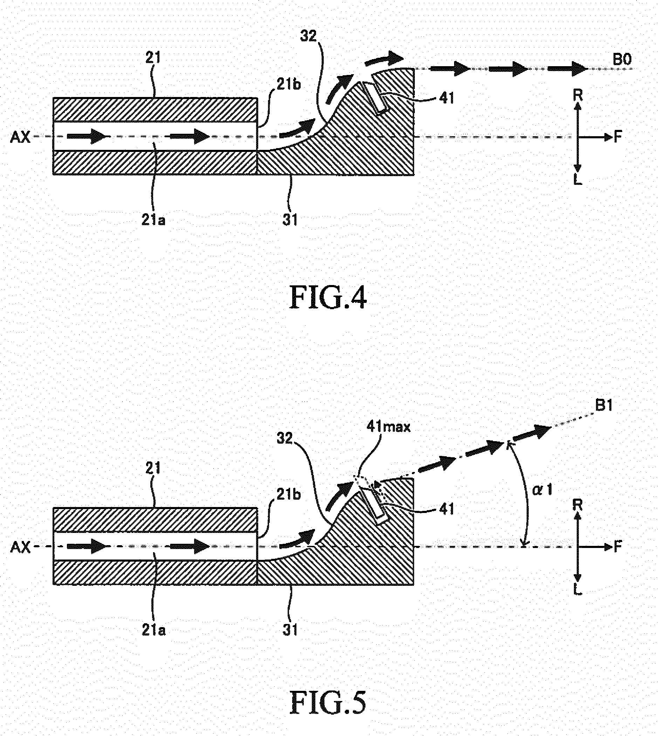

According to the above-mentioned structure, the guide wall of the air blowing device has the above-mentioned convex surface shape and arrangement, and hence, when a user of an automobile views the air blowing device from the front side of the air outlet, a line of sight of the user is blocked by the guide wall so that the air outlet is not visually recognized by the user (see, for example, FIG. 3). Further, when the projecting amount from the guide wall of the movable projecting portion is adjusted in consideration of the intended direction of the blowing airflow, a degree of separation of the airflow from the guide wall (hereinafter referred to as "separation degree") is adjusted so that the blowing airflow is guided in the intended direction (see, for example, FIG. 4 to FIG. 7).

Now, the above-mentioned features according to the one embodiment of the present invention are described in more detail.

The guide wall according to the one embodiment of the present invention is formed on downstream with respect to the air outlet to guide the airflow having passed through the air outlet in the intended direction. The guide wall has the convex surface shape protruding in the direction intersecting the forward direction of the air outlet. The guide wall is arranged so that the projection image, which is obtained by projecting the convex surface of the guide wall, which is a curved surface having a convex shape, onto the virtual plane including the air outlet, covers the entire air outlet. As a result, when the user views the air blowing device along the projection direction, that is, from the front side of the air outlet, the air outlet is hidden by the guide wall so that the air outlet is not visually recognized by the user (see, for example, FIG. 3).

Meanwhile, the airflow having passed through the air outlet is caused to flow along the guide wall in a manner of adhering to the surface of the guide wall, which is a curved surface having a convex shape. This is because, when an object is present in the vicinity of a fluid having viscosity, an effect (Coanda effect) of curving a flow of the fluid along a surface of the object is generated. When the movable projecting portion projects from the inside of the guide wall to the outside of the guide wall while the airflow is caused to flow as described above, the airflow is brought into contact with the movable projecting portion. Specifically, a part of the airflow caused to flow in the vicinity of a surface of the guide wall is brought into contact with the movable projecting portion projecting from the surface of the guide wall. Through the contact, on downstream of the movable projecting portion, the airflow is separated from the surface of the guide wall by a distance corresponding to the projecting amount from the guide wall. An adhesive force obtained by the Coanda effect depends on a distance between the airflow and the surface of the guide wall. Therefore, on the downstream of the movable projecting portion, the adhesive force obtained by the Coanda effect is reduced.

Specifically, according to experiments or the like conducted by the inventors, it became clear that the adhesive force on the downstream of the movable projecting portion becomes smaller as the projecting amount of the movable projecting portion becomes larger, and that the adhesive force on the downstream of the movable projecting portion is completely lost when the projecting amount exceeds a predetermined threshold value. In other words, it became clear that the airflow is gradually separated from the guide wall, that is, the flow direction of the airflow is gradually inclined in a direction separating from the guide wall, as the projecting amount of the movable projecting portion becomes larger, and that the airflow is separated from the guide wall when the projecting amount exceeds the predetermined threshold value. The flow direction of the airflow separated from the guide wall substantially matches with a direction along a tangential plane (hereinafter referred to as "tangential plane direction") of the guide wall at a separating position.

Unlike the above-mentioned case, when the projecting amount of the movable projecting portion is zero, that is, when the movable projecting portion is not projected from the surface of the guide wall, the airflow is not brought into contact with the movable projecting portion, with the result that the adhesive force obtained by the Coanda effect is not lost. In other words, in this case, the airflow flows along the surface of the guide wall also on the downstream of the movable projecting portion and is separated at a predetermined position, for example, at an endmost portion of the guide wall, on the downstream of the movable projecting portion. At this time, the flow direction of the airflow matches with the tangential plane direction at the predetermined position (separating position).

In this manner, when the projecting amount from the guide wall of the movable projecting portion is changed, the separation degree of the airflow on the downstream of the movable projecting portion is changed, and the flow direction of the blowing airflow is changed. Specifically, as the projecting amount becomes larger, that is, as the adhesive force obtained by the Coanda effect becomes smaller, the flow direction of the airflow is changed in a direction away from the tangential plane direction of the guide wall at the predetermined position, that is, the separating position determined depending on the shape of the guide wall on the downstream of the movable projecting portion. Accordingly, the flow direction of the blowing airflow can be adjusted by adjusting the projecting amount so as to obtain the separation degree in accordance with the intended direction of the blowing airflow. That is, the flow direction of the blowing airflow can be adjusted through the operation of the movable projecting portion in accordance with the intended direction.

In addition, the air blowing device according to the one embodiment of the present invention can keep the air outlet invisible to the extent possible without impairing the function as an air blowing device to adjust the flow direction of the blowing airflow.

Further, the air blowing device according to the one embodiment of the present invention does not require an airflow direction adjustment mechanism such as a fin unlike the related-art device, and hence the air outlet of the air blowing device can also be further narrowed as compared to that in the related-art device. In addition, not only the air outlet but also the air blowing device itself may be less likely to be recognized by the user with the use of the air blowing device according to the one embodiment of the present invention, in particular, the guide wall as a part of another interior component of the automobile, such as a frame for fixing a display of a car navigation system or the like. In this manner, the appearance of an interior of the automobile and the like can also be further enhanced.

Incidentally, the above-mentioned air outlet corresponds to an opening end of the airflow passage, which is an end of a hollow portion inside the tubular body on the downstream, and is formed on upstream with respect to the guide wall. From the viewpoint of leading the airflow having passed through the air outlet to the guide wall while preventing stagnation to the extent possible, it is preferred that a distance between the air outlet and an end of the guide wall on the upstream be as small as possible, and further preferred that the air outlet and the end of the guide wall be located at the same position.

The above-mentioned forward direction of the air outlet corresponds to an extending direction of a straight line passing through a center of an opening plane of the air outlet so as to be orthogonal to the opening plane. The forward direction of the air outlet may also be expressed as, for example, a direction in which the airflow having passed through the air outlet is caused to flow straight, or as an axial direction of the airflow passage.

The above-mentioned virtual plane including the air outlet corresponds to a virtual plane on which the opening plane of the air outlet is to be present. The virtual plane including the air outlet may also be expressed as, for example, a plane obtained by expanding the opening plane of the air outlet to a periphery thereof.

The above-mentioned projecting amount only needs to be a parameter indicating a degree of projection of the movable projecting portion with respect to the surface of the guide wall, and is not particularly limited. As the projecting amount, for example, there can be adopted a distance between a portion of the movable projecting portion, which is farthest from the surface of the guide wall, that is, a tip of the movable projecting portion, and the surface of the guide wall, a cross sectional area of a portion of the movable projecting portion present on an outer side of the guide wall with respect to the surface of the guide wall when the movable projecting portion is cut along a plane parallel extending in upward, downward, leftward and rightward directions, an angle formed between the surface of the guide wall, which is present on upstream of the movable projecting portion and adjacent to the movable projecting portion, and a side surface of the movable projecting portion adjacent to the surface of the guide wall, and the like.

The structure and effects of the air blowing device according to the one embodiment of the present invention are described above. Next, some aspects (Aspects 1 and 2) of the air blowing device according to the one embodiment of the present invention are described below.

### Aspect 1

In the air blowing device according to the one embodiment of the present invention, the shape of the movable projecting portion, the position at which the movable projecting portion is formed, and the like, only need to be determined in consideration of adjustment performance for the blowing airflow, which is required in the air blowing device, or the like, and is not particularly limited.

For example, when the movable projecting portion has a shape capable of easily separating the airflow from the guide wall, the projecting amount of the movable projecting portion can be reduced without sacrificing a function to adjust the flow direction of the blowing airflow. As a result, the movable projecting portion is less liable to be visually recognized by the user.

Therefore, an air blowing device according to Aspect 1 may be configured such that, when the projecting amount is larger than zero, an angle formed between a surface of the guide wall, which is formed on upstream of the movable projecting portion and adjacent to the movable projecting portion, and a side surface of the movable projecting portion, which is adjacent to the surface, is a right angle or an acute angle.

According to the above-mentioned structure, as compared to a case where the above-mentioned angle is an obtuse angle, the distance between the airflow and the surface of the guide wall is rapidly changed, that is, a change rate of the distance is large at the movable projecting portion, with the result that the airflow is easily separated from the guide wall. That is, the movable projecting portion having the above-mentioned structure has the shape capable of easily separating the airflow from the guide wall. Thus, in the air blowing device according to Aspect 1, the projecting amount of the movable projecting portion can be reduced, and the movable projecting portion is less liable to be visually recognized by the user.

Incidentally, the guide wall has the convex surface shape, and hence, in a strict sense, the surface of the guide wall is not a flat surface but a curved surface, which is a curved surface having a convex shape. Further, the side surface of the movable projecting portion may also have a surface shape in conformity with the shape of the movable projecting portion, and hence is not necessarily a flat surface. However, in the viewpoint of discussing separability of the airflow in the movable projecting portion, curvatures of the surfaces may be ignored. That is, in the air blowing device of Aspect 1, the surface of the guide wall and the side surface of the movable projecting portion may be each regarded as a flat surface to determine the above-mentioned angle.

The above-mentioned angle may also be expressed as an angle formed between the tangential plane of the surface of the guide wall, which is formed on the upstream with respect to the movable projecting portion and adjacent to the movable projecting portion, and the tangential plane of the side surface of the movable projecting portion, which is adjacent to the surface of the guide wall.

### Aspect 2

In the air blowing device according to the one embodiment of the present invention, when the movable projecting portion is not projected from the guide wall, that is, when the projecting amount is zero, the movable projecting portion can be received in a hollow portion formed in the guide wall. When the air blowing device is constructed such that an opening portion of the hollow portion, which is an opening portion through which the movable projecting portion passes, does not exert influence on the airflow, the airflow is prevented from being unintentionally separated in the vicinity of the hollow portion. As a result, the flow direction of the blowing airflow can more precisely be adjusted.

Thus, an air blowing device according to Aspect 2 may be configured such that, when the projecting amount is zero, the movable projecting portion forms a part of the wall surface of the guide wall.

According to the above-mentioned structure, when the movable projecting portion is received in the guide wall, that is, when the projecting amount is zero, at least a part of the opening portion, through which the movable projecting portion passes, is to be closed by the movable projecting portion, specifically, to be flush with the surface of the guide wall. Thus, in the air blowing device according to Aspect 2, as compared to a case where the opening portion is not closed, the flow direction of the blowing airflow can more precisely be adjusted.

### Brief Description of Drawings

FIG. 1 is a schematic perspective view for illustrating an example of an air blowing device according to an embodiment of the present invention.
FIG. 2 is a schematic sectional view for illustrating the air blowing device cut along a plane along the axis A-A of FIG. 1.
FIG. 3 is a schematic sectional view for illustrating the air blowing device cut along the plane along the axis A-A of FIG. 1.
FIG. 4 is a schematic view for illustrating a relationship between a projecting amount of a movable projecting portion and a flow direction of a blowing airflow.
FIG. 5 is a schematic view for illustrating the relationship between the projecting amount of the movable projecting portion and the flow direction of the blowing airflow.
FIG. 6 is a schematic view for illustrating the relationship between the projecting amount of the movable projecting portion and the flow direction of the blowing airflow.
FIG. 7 is a schematic view for illustrating the relationship between the projecting amount of the movable projecting portion and the flow direction of the blowing airflow.
FIG. 8 is a graph for showing the relationship between the projecting amount of the movable projecting portion and the flow direction of the blowing airflow.
FIG. 9 is a sectional view for illustrating an example of an air blowing device according to another embodiment of the present invention.
FIG. 10 is a sectional view for illustrating an example of an air blowing device according to another embodiment of the present invention.
FIG. 11 is a sectional view for illustrating an example of an air blowing device according to another embodiment of the present invention.

### Description of Embodiments

Now, an air blowing device according to embodiments of the present invention is described with reference to the drawings.

### <Overview of Device>

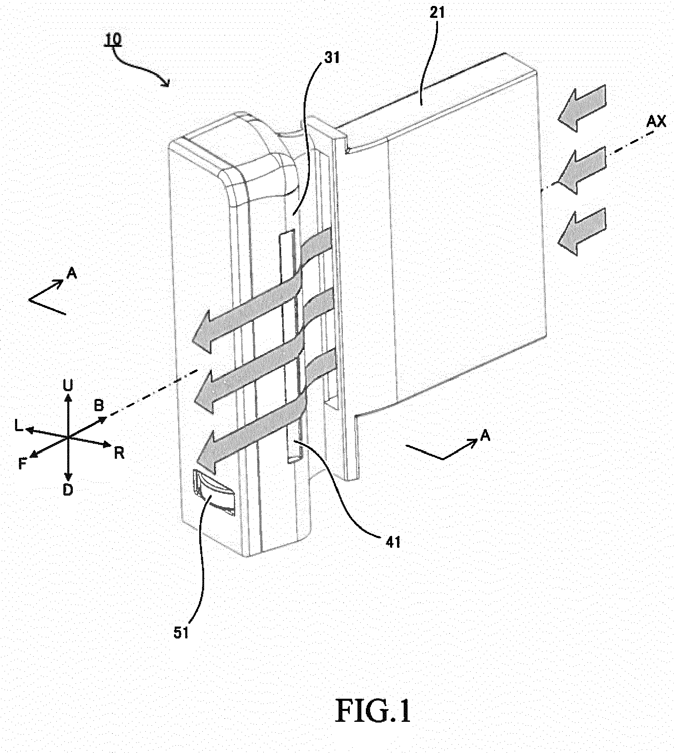

As illustrated in a schematic perspective view of FIG. 1, an air blowing device 10 according to an example of an embodiment of the present invention (hereinafter referred to as "embodiment device 10") includes a hollow columnar tubular body 21 for allowing an airflow to pass therethrough, a shelf-like guide wall 31 for allowing the airflow to be guided along a curved wall surface, and a movable projecting portion 41 which is capable of projecting from an inside of the guide wall 31 to an outside of the guide wall 31. Further, the embodiment device 10 includes an adjusting dial 51 for adjusting a projecting amount of the movable projecting portion 41.

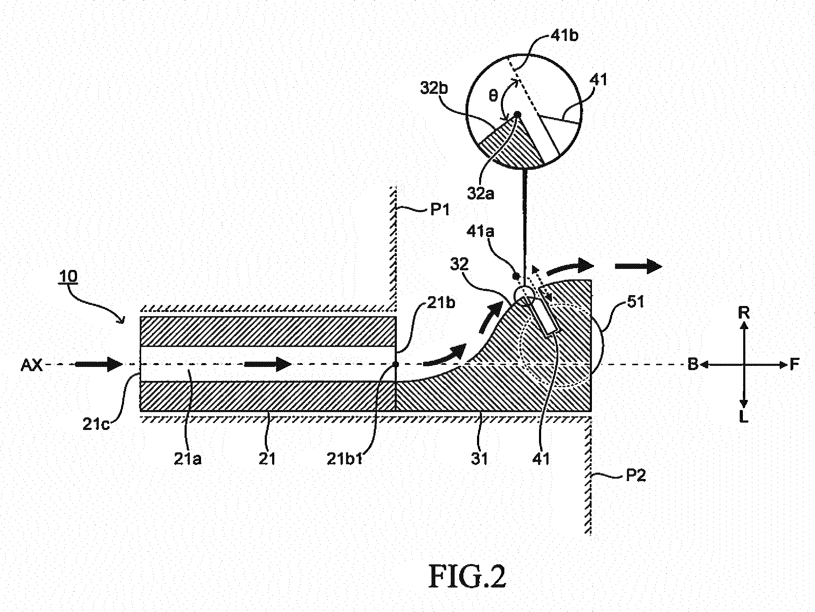

Now, for the sake of convenience, forward and backward directions from the embodiment device 10 along an axial line AX of the embodiment device 10 are hereinafter referred to as "forward direction F" and "backward direction B," respectively. Upward, downward, leftward, and rightward directions from the embodiment device 10, which are orthogonal to the forward direction F, are hereinafter referred to as "upward direction U," "downward direction D," "leftward direction L," and "rightward direction R," respectively. Those directions are defined based on forward, backward, upward, downward, leftward, and rightward directions which are given when a user views the embodiment device 10 mounted to an instrument panel of an automobile, or the like (see, for example, FIG. 2).

As indicated by the arrows of FIG. 1, the embodiment device 10 is configured to guide an airflow, which has flowed into the tubular body 21 from an end of the tubular body 21 in the backward direction B and has blown from an end of the tubular body 21 in the forward direction F, along the guide wall 31 in the forward direction F while curving the airflow, and to blow (or guide) the airflow in a direction determined depending on the projecting amount of the movable projecting portion 41 (described later in detail).

Now, the structure of each component is described in more detail while a case where the embodiment device 10 is mounted to the automobile is exemplified.

As illustrated in a schematic sectional view of FIG. 2, which is a sectional view taken along the axis A-A of FIG. 1, the embodiment device 10 is mounted to the instrument panel of the automobile so as to be sandwiched between a peripheral component P1 and a peripheral component P2. In this embodiment, the peripheral component P1 is a casing of the instrument panel, and the peripheral component P2 is a display exterior portion of a car navigation system.

The tubular body 21 defines an airflow passage 21a thereinside, an air outlet 21 b in the end thereof in the forward direction F, and an opening portion 21c in the end thereof in the backward direction B. The tubular body 21 is a tubular body having a substantially rectangular parallelepiped shape. The air outlet 21b and the opening portion 21c have substantially rectangular parallelepiped shapes with short sides in the leftward and rightward directions (L and R) and long sides in the upward and downward directions (U and D) (see also FIG. 1). Further, the guide wall 31, which is configured to guide an airflow having passed through the air outlet 21 b in an intended direction, is formed on downstream with respect to the air outlet 21 b of the tubular body 21. A width of the guide wall 31 in a vertical direction, which is a direction perpendicular to the drawing sheet, is substantially equal to a width of the tubular body 21 in the vertical direction. With those structures, air, which has flowed from an opening portion 21c of the tubular body 21, passes through the airflow passage 21a. The air is then blown from the air outlet 21b, and is guided (or led) in the intended direction along the guide wall 31. The arrows in FIG. 1 indicate the flow of the air.

The amount of the air supplied to the embodiment device 10, which is an amount of the air flowing from the opening portion 21c of the embodiment device 10 in the backward direction B into the airflow passage 21a, that is, flow rate of the airflow passing through the airflow passage 21a and then the air outlet 21b, may be adjusted by operating as necessary a flow rate adjustment valve (not shown) arranged inside or outside the embodiment device 10, a pump (not shown) for supplying air to the embodiment device 10, or the like.

The guide wall 31 has a wall surface 32 having a convex surface shape, which is a curved surface having a convex shape. The wall surface 32 of the guide wall 31 protrudes in a direction intersecting the forward direction F of the air outlet 21b, which is a direction extending direction of a straight line passing through a center point 21b1 of an opening plane of the air outlet 21b so as to be orthogonal to the opening plane. Specifically, the forward direction F of the air outlet 21 b is an extending direction of the axial line AX in FIG. 1, and the wall surface 32 of the guide wall 31 protrudes from the left side L to the right side R in FIG. 2.

Further, as illustrated in FIG. 3, the guide wall 31, specifically, the wall surface 32 is arranged so that a projection image PP, which is obtained by projecting the guide wall 31, specifically, the wall surface 32 onto a virtual plane IP including the air outlet 21b, covers the entire air outlet 21b.

Therefore, when the user of the automobile views the embodiment device 10 from the front side of the embodiment device 10, that is, along the projection direction as indicated by the line of sight in FIG. 2, the air outlet 21 b is hidden by the guide wall 31 so that the air outlet 21 b is not visually recognized by the user.

With reference to FIG. 2 again, the movable projecting portion 41 is a plate body having a substantially rectangular parallelepiped shape in plan view. The movable projecting portion 41 is coupled to the adjusting dial 51 through intermediation of a link mechanism (not shown). The movable projecting portion 41 is advanceable and retreatable in directions of the dotted arrows of FIG. 2 in accordance with rotation of the adjusting dial 51. In other words, the movable projecting portion 41 is configured to adjust the projecting amount within a range of from a state in which the movable projecting portion 41 is received inside the guide wall 31, that is, a state in which the projecting amount is zero to a state in which the movable projecting portion 41 is projected to the outside of the guide wall 31, that is, a state in which the projecting amount is a predetermined maximum amount. In this embodiment, the projecting amount of the movable projecting portion 41 is defined as the shortest distance between a tip 41 a of the movable projecting portion 41 and the wall surface 32 of the guide wall, which is a distance between the tip 41 a and an end 32a of the wall surface 32 in partially enlarged view.

Further, as illustrated in a partially enlarged view of FIG. 2, when the movable projecting portion 41 is projected from the guide wall 31, for example, when the movable projecting portion 41 is moved to the dotted line position of FIG. 2, the movable projecting portion 41 is constructed such that an angle θ formed between a surface 32b of the guide wall, that is, a wall surface, which is formed on upstream of the movable projecting portion 41 and adjacent to the movable projecting portion 41, and a side surface 41b of the movable projecting portion 41, which is adjacent to the wall surface 32, is equal to or smaller than 90 degrees, which is a right angle or an acute angle.

The overview of the embodiment device 10 is described above.

### <Actual Actuation>

Next, actual actuation of the embodiment device 10 is described.

The embodiment device 10 is configured to adjust a flow direction of a blowing airflow by changing a separation degree of the airflow on downstream of the movable projecting portion 41 through change in projecting amount of the movable projecting portion 41. Now, the adjustment of the blowing airflow by the embodiment device 10 is described with reference to FIG. 4 to FIG. 7. Similarly to FIG. 2, FIG. 4 to FIG. 7 are schematic sectional views for illustrating the embodiment device 10, which are sectional views taken along the axis A-A of FIG. 1. In FIG. 4 to FIG. 7, for the sake of convenience, the illustration of the peripheral components P1 and P2 and the adjusting dial 51 is omitted.

As illustrated in FIG. 4, the airflow, which has flowed from the opening portion 21c of the embodiment device 10 on the back side into the airflow passage 21 a, passes through the air outlet 21 b, and then flows along the wall surface 32 of the guide wall 31 due to the Coanda effect. Further, as illustrated in FIG. 4, when the projecting amount of the movable projecting portion 41 is zero, the airflow having passed through the airflow passage 21a flows along the wall surface 32 of the guide wall 31 without being brought into contact with the movable projecting portion 41. Then, the airflow is separated from the wall surface 32 of the guide wall 31 at an endmost portion of the guide wall 31 in the forward direction F. After that, the airflow flows in a tangential plane direction B0 at the endmost portion of the wall surface 32 of the guide wall 31. As a result, the flow direction of the blowing airflow is adjusted to the forward direction F of the embodiment device 10. As an indicator of the flow direction of the blowing airflow, for example, an angle formed between the axial line AX of the embodiment device 10 and the flow direction B0 of the blowing airflow is zero, that is, the axial line AX and the flow direction B0 are parallel to each other.

Next, as illustrated in FIG. 5, when the movable projecting portion 41 is moved so that the projecting amount of the movable projecting portion 41 becomes a projecting amount P1 which corresponds to substantially ten percent of the maximum projecting amount, which is a projecting amount obtained when the movable projecting portion 41 is present at a position 41 max of the dotted line of FIG. 5, the airflow having passed through the air outlet 21b is brought into contact with the movable projecting portion 41. Thus, an adhesive force obtained by the Coanda effect on the downstream of the movable projecting portion 41 is reduced as compared to the case of FIG. 4, that is, the case where the projecting amount is zero. In this case, on the downstream of the movable projecting portion 41, the airflow does not completely flow along the wall surface 32 of the guide wall 31 and flows in a direction B1 further away from the wall surface 32 than the case of FIG. 4. In this case, due to reduction in adhesive force, the airflow is separated from the wall surface 32 of the guide wall 31 on slightly upstream of the endmost portion of the guide wall 31 in the forward direction F. As a result, the flow direction of the blowing airflow is adjusted in the rightward direction R with respect to the flow direction of FIG. 4. As an indicator of the flow direction of the blowing airflow, for example, an angle formed between the axial line AX of the embodiment device 10 and the flow direction B1 of the blowing airflow is an angle α1 which is larger than zero as illustrated in FIG. 4.

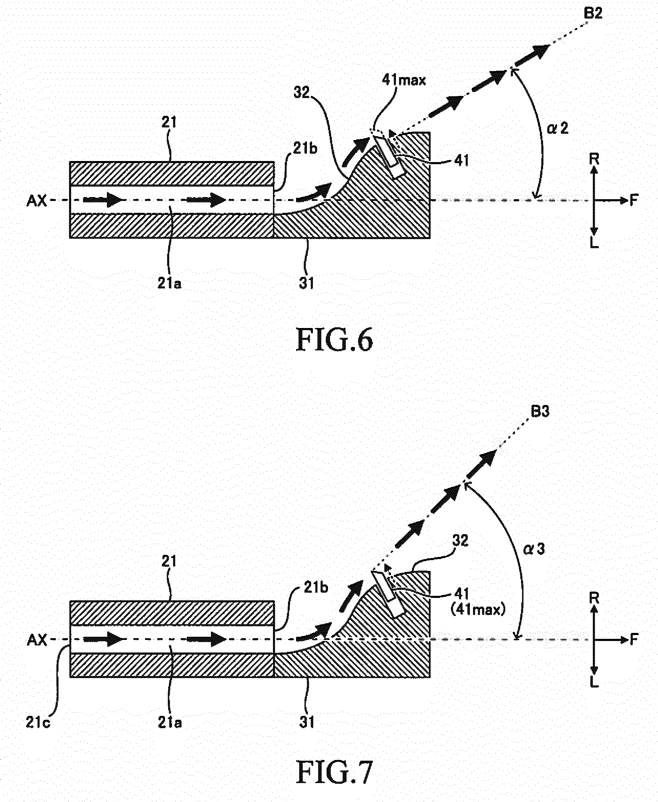

Next, as illustrated in FIG. 6, when the movable projecting portion 41 is moved so that the projecting amount of the movable projecting portion 41 becomes a projecting amount P2 which corresponds to substantially half of the maximum projecting amount, specifically, a position 41max of the dotted line, the adhesive force obtained by the Coanda effect on the downstream of the movable projecting portion 41 is further reduced as compared to the case of FIG. 5. In this case, on the downstream of the movable projecting portion 41, the airflow flows in a direction B2 further away from the wall surface 32 than the case of FIG. 5. In this case, due to reduction in adhesive force, the airflow is separated from the wall surface 32 of the guide wall 31 on slightly upstream of the separation position in the case of FIG. 5. As a result, the flow direction of the blowing airflow is further adjusted in the rightward direction R with respect to the flow direction of FIG. 5. As an indicator of the flow direction of the blowing airflow, for example, an angle formed between the axial line AX of the embodiment device 10 and the flow direction B2 of the blowing airflow is an angle α2 which is larger than the angle α1 illustrated in FIG. 5.

Next, as illustrated in FIG. 7, when the movable projecting portion 41 is moved so that the projecting amount of the movable projecting portion 41 becomes a maximum projecting amount P3, which is a projecting amount obtained when the movable projecting portion 41 reaches the position 41max of the dotted lines of FIG. 5 and FIG. 6, the adhesive force obtained by the Coanda effect is completely lost on the downstream of the movable projecting portion 41. Thus, the airflow is separated from the wall surface 32 of the guide wall 31 at a position where the movable projecting portion 41 is present. In this case, on the downstream of the movable projecting portion 41, the airflow flows in a direction further away from the wall surface 32 than the case of FIG. 6. Specifically, the airflow flows in a direction B3 which is substantially the same as the tangential plane direction of the wall surface 32 of the guide wall 31 at the position where the movable projecting portion 41 is present (separating position). As a result, the flow direction of the blowing airflow is further adjusted in the rightward direction R with respect to the flow direction of FIG. 6. As an indicator of the flow direction of the blowing airflow, for example, an angle formed between the axial line AX of the embodiment device 10 and the flow direction B3 of the blowing airflow is an angle α3 which is larger than the angle α2 illustrated in FIG. 6.

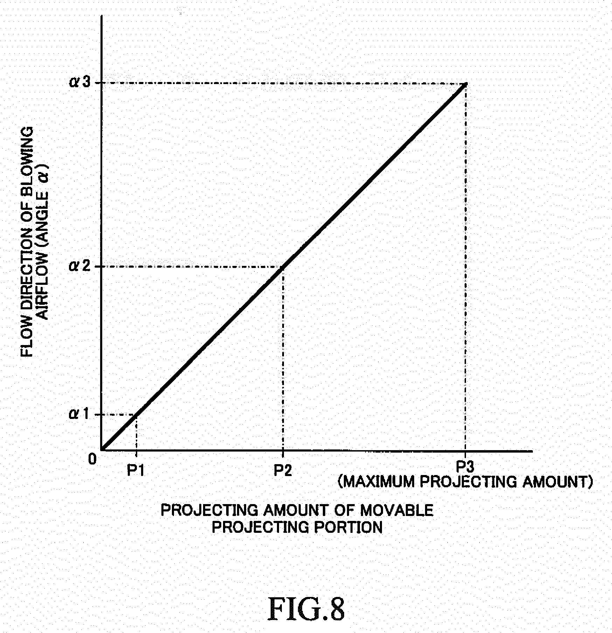

In this manner, the embodiment device 10 is configured to change the separation degree of the airflow on the downstream of the movable projecting portion 41 and adjust the flow directions (B0 to B3) of the blowing airflow by changing the projecting amount (zero to P3) of the movable projecting portion 41. Specifically, as shown in FIG. 8, the flow direction of the blowing airflow, that is, an angle formed between the axial line AX and the flow direction of the blowing airflow can continuously be changed within a range of from zero to α3 by increasing and reducing the projecting amount of the movable projecting portion 41.

The actual actuation of the embodiment device 10 is described above.

As described above, the embodiment device 10 includes the tubular body 21, the guide wall 31, and the movable projecting portion 41, which are structured as described above. With this, the embodiment device 10 can adjust the flow direction of the blowing airflow while preventing the air outlet 21 b from being visually recognized by the user, that is, keeping the air outlet 21 b invisible.

### <Other Embodiments>

The present invention is not limited to the above-mentioned embodiment, and various modifications may be employed within the scope of the present invention.

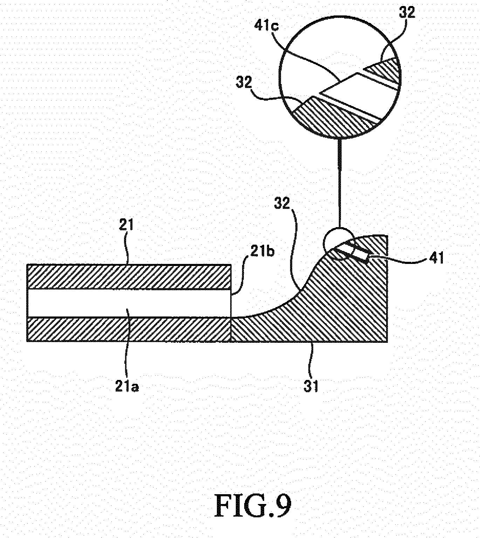

For example, in the embodiment device 10, when the projecting amount of the movable projecting portion 41 is zero, that is, when the movable projecting portion 41 is received inside the guide wall 31, the opening portion, through which the movable projecting portion 41 passes, is exposed to the surface of the guide wall 31. However, the air blowing device according to the present invention may be constructed so that, as illustrated in FIG. 9, in particular, in a partially enlarged view of FIG. 9, the movable projecting portion 41, specifically, a surface 41c of the movable projecting portion 41 forms a part of the wall surface 32 of the guide wall 31 when the movable projecting portion 41 is received inside the guide wall 31. With this structure, the opening portion, through which the movable projecting portion 41 passes, is closed by the movable projecting portion 41. Thus, when the movable projecting portion 41 is received inside the guide wall 31, that is when the projecting amount is zero, an influence that the opening portion exerts on the airflow can be reduced. As a result, the flow direction of the blowing airflow can more precisely be adjusted.

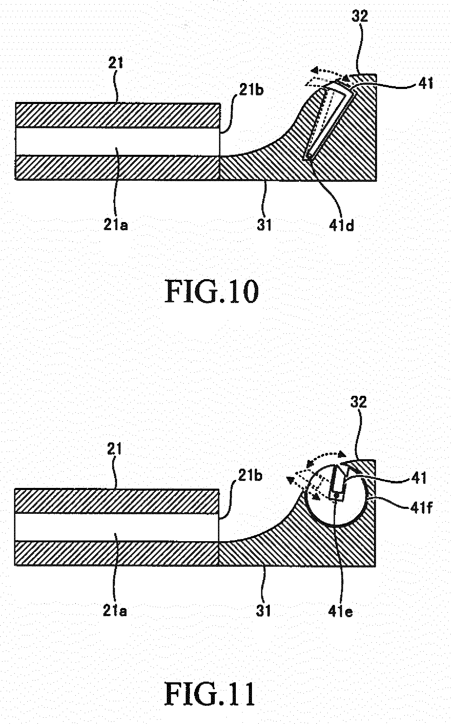

Further, the embodiment device 10 is configured to adjust the projecting amount of the movable projecting portion 41 by causing the movable projecting portion 41 to substantially linearly advance and retreat. However, as illustrated in FIG. 10, the air blowing device according to the present invention may be constructed to adjust the projecting amount by rotating the movable projecting portion 41 about a predetermined rotary shaft 41d, that is, by causing the movable projecting portion 41 to arcuately advance and retreat. Further, as illustrated in FIG. 11, the air blowing device according to the present invention may be constructed to adjust the projecting amount by receiving the movable projecting portion 41 in a support body 41f which is rotatable about a rotary shaft 41e and causing the movable projecting portion 41 to advance and retreat in accordance with rotation of the support body 41f, that is, by combining linear movement and arcuate movement. In such structures, the definition of the projecting amount may be the same as that of the embodiment device 10, specifically, the shortest distance between the tip of the movable projecting portion 41 and the wall surface 32 of the guide wall. Alternatively, the definition of the projecting amount may be other definitions, for example, a cross sectional area of a portion of the movable projecting portion 41 present on an outer side of the guide wall 31 with respect to the wall surface 32 of the guide wall, or an angle formed between the wall surface 32 of the guide wall, which is present on upstream of the movable projecting portion 41 and adjacent to the movable projecting portion 41, and the side surface of the movable projecting portion 41 adjacent to the wall surface 32 of the guide wall. As described above, the air blowing device according to the present invention may adopt various methods as a method of adjusting the projecting amount of the movable projecting portion 41.

Further, the embodiment device 10 is mounted inside a vehicle cabin of the automobile, for example, an inner panel. However, the air blowing device of the present invention may be mounted on another portion such as a pillar portion inside the vehicle cabin of the automobile. In addition, the air blowing device of the present invention is not limited to the one mounted inside the vehicle cabin of the automobile, and, for example, may be mounted to such various members that air supply and stop of the air supply are desired.

### Reference Signs List

10 air blowing device, 21 tubular body, 21a airflow passage, 21b air outlet, 31 guide wall, 41 movable projecting portion, IP virtual plane, PP projection image

## Claims

1. An air blowing device, comprising:
a tubular body defining an airflow passage and an air outlet;
a guide wall configured to guide an airflow having passed through the air outlet in an intended direction; and
a movable projecting portion, which is capable of projecting from an inside of the guide wall to an outside of the guide wall, wherein:
the guide wall having a convex surface shape projecting in a direction intersecting a forward direction of the air outlet, and being arranged so that a projection image, which is obtained by projecting the guide wall onto a virtual plane including the air outlet, covers the entire air outlet,
the movable projecting portion being capable of adjusting a projecting amount from the guide wall within a range of from zero to a predetermined maximum amount, and being configured to adjust the projecting amount depending on the intended direction.

2. The air blowing device according to claim 1, wherein, when the projecting amount is larger than zero, an angle formed between a surface of the guide wall, which is formed on upstream of the movable projecting portion and adjacent to the movable projecting portion, and a side surface of the movable projecting portion, which is adjacent to the surface, is a right angle or an acute angle.

3. The air blowing device according to claim 1 or claim 2, wherein, when the projecting amount is zero, the movable projecting portion forms a part of the wall surface of the guide wall.
